# EUROPÄISCHE PATENTANMELDUNG

(11) **EP 3 974 111 A1**
(43) Veröffentlichungstag der Anmeldung: **30.03.2022**
(21) Anmeldenummer: 20198401.0
(22) Anmeldetag: 25.09.2020
(51) Int. Cl.: B25F 5/00, B24B 23/02, B27B 5/38

(54) **HANDGEFÜHRTES ARBEITSGERÄT UND VERFAHREN ZUM BETRIEB EINES HANDGEFÜHRTEN ARBEITSGERÄTES**

(71) Anmelder: Andreas Stihl AG & Co. KG, 71336 Waiblingen (DE)
(72) Erfinder: Aupperle, Tobias, 73663 Berglen (DE); Gültlinger, Johannes, 70374 Stuttgart (DE); Mandel, Roland, 70329 Stuttgart (DE); Mayer, Felix, 71332 Waiblingen (DE)
(74) Vertreter: Karzel, Philipp

(57) **Zusammenfassung**

Die Erfindung betrifft ein handgeführtes Arbeitsgerät mit einem Antriebsmotor (10), wobei der Antriebsmotor (10) mindestens ein Werkzeug (8) antreibt. Das Arbeitsgerät umfasst eine mechanische Bremsvorrichtung (15) für das Werkzeug (8), wobei die Bremsvorrichtung (15) vom Bediener mittels eines Betätigungshebels (16) zwischen einer gebremsten Stellung (41) und einer gelösten Stellung (40) verstellbar ist. Das Arbeitsgerät (1) umfasst einen Elektromagneten (33) und einen mit dem Elektromagneten (33) zusammenwirkenden Anker (36). Der Elektromagnet (33) ist dazu ausgebildet, die Bremsvorrichtung (15) in ihrer gelösten Stellung (40) zu halten. Das Arbeitsgerät (1) weist mindestens eine Steuereinrichtung (103, 105) auf. Die mindestens eine Steuereinrichtung (103, 105) ist dazu ausgebildet, die Lage des Ankers (36) gegenüber dem Elektromagneten (33) zur Bestimmung der Stellung (40, 41) der Bremsvorrichtung (15) zu ermitteln.

## Beschreibung

Die Erfindung betrifft ein handgeführtes Arbeitsgerät und ein Verfahren zum Betrieb eines handgeführten Arbeitsgerätes.

Es sind Trennschleifer mit Antriebsmotor und mit Werkzeug bekannt, wobei das Werkzeug über einen Riementrieb angetrieben ist. Derartige Trennschleifer sind komplexe Arbeitsgeräte, die regelmäßigen Wartungsintervallen unterliegen. Dabei kann das Arbeitsgerät in einen Servicezustand versetzt werden, in welchem Serviceroutinen erfolgen. Hierbei ist auch der Austausch von Informationen zwischen dem Arbeitsgerät und dem Bediener notwendig.

Der Erfindung liegt die Aufgabe zugrunde, ein handgeführtes Arbeitsgerät derart weiterzubilden, dass auf einfache Weise eine Informationsübermittlung zwischen Bediener und Arbeitsgerät ermöglicht ist.

Die Aufgabe wird durch ein handgeführtes Arbeitsgerät gemäß dem Anspruch 1 gelöst.

Das erfindungsgemäße Arbeitsgerät umfasst einen Antriebsmotor, wobei der Antriebsmotor mindestens ein Werkzeug antreibt. Das Arbeitsgerät umfasst eine mechanische Bremsvorrichtung für das Werkzeug, wobei die Bremsvorrichtung vom Bediener mittels eines Bedienelements zwischen einer gebremsten Stellung und einer gelösten Stellung verstellbar ist. Das Arbeitsgerät umfasst einen Elektromagneten und einen mit dem Elektromagneten zusammenwirkenden Anker. Der Elektromagnet ist dazu ausgebildet, die Bremsvorrichtung in ihrer gelösten Stellung zu halten. Das Arbeitsgerät weist mindestens eine Steuereinrichtung auf, wobei die mindestens eine Steuereinrichtung dazu ausgebildet ist, die Lage des Ankers gegenüber dem Elektromagneten zur Bestimmung der Stellung der Bremseinrichtung zu ermitteln. In der gelösten Stellung der Bremsvorrichtung kann der Antriebsmotor das Werkzeug antreiben. In der gebremsten Stellung ist der Antrieb des Werkzeuges mittels des Antriebsmotors durch die Bremseinrichtung verhindert.

Betätigt der Bediener das Bedienelement, wird der Anker relativ zum Elektromagneten bewegt, wobei die Steuereinrichtung die Lage des Ankers, insbesondere in gelöster Stellung und gebremster Stellung der Bremseinrichtung, erkennt.

Unter Verwendung spezifischer Bedienmuster kann der Bediener somit Informationen an das Arbeitsgerät übermitteln, wobei das Steuergerät die Lage des Ankers bestimmt, das Bedienmuster analysiert und die übermittelte Information verarbeitet. So kann beispielsweise ein Servicezustand quittiert werden, ohne zusätzliche Sensoren oder Benutzerschnittstellen am Arbeitsgerät vorsehen zu müssen.

Es ist vorteilhaft vorgesehen, dass die mechanische Bremseinrichtung ein Bremsband umfasst, wobei das Bremsband auf eine das Werkzeug antreibende Kupplungstrommel wirkt. Die Kupplungstrommel ist Teil einer Fliehkraftkupplung.

Vorzugsweise betätigt das Bedienelement mechanisch einen Hebel, wobei an dem Hebel insbesondere der Anker angeordnet ist. Vorteilhaft wirkt eine Federeinheit derart auf den Hebel, dass der Anker über eine Zugkraft in Richtung weg von einem Joch des Elektromagneten gespannt ist. Bei Betätigung des Bedienelementes wird der Anker über den Hebel entgegen der Zugkraft an den Elektromagneten geführt. Gibt der Bediener den Hebel bei inaktivem Elektromagneten frei, wird der Hebel mittels der Zugkraft der Federeinheit den Anker von dem Elektromagneten wegziehen. Der Elektromagnet ist insbesondere derart ausgelegt, dass in bestromtem Zustand des Elektromagneten in gelöster Stellung der Bremseinrichtung der Anker entgegen der Zugkraft am Joch des Elektromagneten gehalten ist. Ist der Elektromagnet unbestromt, wird der Anker über den Hebel mittels der Zugkraft von dem Elektromagneten weggezogen, wodurch die Bremsvorrichtung die Kupplungstrommel und damit auch das Werkzeug bremst.

Es ist vorteilhaft vorgesehen, dass die Lage des Ankers gegenüber dem Elektromagneten dadurch ermittelt wird, dass am Elektromagneten eine Testspannung angelegt und der sich ergebende Stromfluss ermittelt wird. In Abhängigkeit der Lage des Ankers gegenüber dem Elektromagneten ändert sich auch die Induktivität der Spule des Elektromagneten. Liegt der Anker an dem Elektromagneten an, ist die Induktivität höher als bei offenem Joch des Elektromagneten. Mit zunehmender Induktivität reagiert die an der Spule des Elektromagneten gemessene Stromstärke mit größerer Verzögerung auf das Spannungssignal. Auf Basis der gemessenen Stromstärken kann die Steuerungseinrichtung auf die Lage des Ankers rückschließen.

Die Testspannung ist insbesondere derart ausgelegt, dass die aus der Testspannung resultierende Magnetkraft des Elektromagneten geringer ist als die auf den Anker wirkende Zugkraft. Demnach ist die Testspannung derart gering, dass bei anliegender Testspannung der Anker nicht an dem Elektromagneten gehalten werden kann. Dadurch hat die Testspannung keinen Einfluss auf die Stellung der Bremsvorrichtung. Die Testspannung entspricht vorzugsweise einzelnen Spannungsimpulsen. Dadurch ist eine einfache Auswertung der Stromstärke möglich.

Es kann vorzugsweise vorgesehen sein, dass die Lage des Ankers gegenüber dem Elektromagneten dadurch ermittelt wird, dass ein Signal eines zusätzlichen Sensors oder eines elektronischen Schalters ausgewertet wird.

Der Erfindung liegt eine weitere Aufgabe zugrunde, ein Verfahren zum Betrieb eines handgeführten Arbeitsgerätes anzugeben, das auf einfache Weise eine Informationsübermittlung zwischen Bediener und Arbeitsgerät ermöglicht.

Die weitere Aufgabe wird durch ein Verfahren gemäß dem Anspruch 10 gelöst.

Gemäß dem erfindungsgemäßen Verfahren ermittelt die Steuereinrichtung die Stellung der Bremseinrichtung durch die Lage des Ankers gegenüber dem Elektromagneten über einen vorgegebenen Zeitraum mehrfach. Dadurch können spezifische Bedienmuster erkannt werden, die zur Übermittlung von Informationen dienen.

Es ist vorzugsweise vorgesehen, dass die Steuereinrichtung Testspannungsimpulse anlegt und den sich daraus ergebenden Stromfluss an dem Elektromagneten ermittelt. Der Stromfluss bzw. die Stromstärke variiert in Abhängigkeit der Lage des Ankers zum Elektromagneten aufgrund der veränderlichen Induktion. Der Stromfluss durch den Elektromagneten steigt gebremst durch die Induktivität über eine gewisse Zeitspanne an. Ist die Induktivität durch beispielsweise das Anliegen des Ankers am Elektromagneten erhöht, ist der Anstieg des Stromflusses verlangsamt, wodurch der maximale Stromwert über die entsprechende Zeitspanne ebenfalls reduziert ist. Mit geringer werdender Induktivität, beispielsweise durch eine entfernte Lage des Ankers, geschieht der Anstieg des Stromflusses schneller und damit erhöht sich der maximale Stromwert über die entsprechende Zeitspanne.

Vorzugsweise vergleicht die Steuereinrichtung zur Ermittlung der Stellung der Bremseinrichtung den Stromfluss mit Referenzwerten. Vorzugsweise ermittelt die Steuereinrichtung die Referenzwerte in gebremster Stellung der Bremseinrichtung. In der gebremsten Stellung der Bremseinrichtung ist der Abstand zwischen Anker und Joch des Elektromagneten maximal, wodurch die Induktivität minimal ist. Bei Erstellung des Referenzwertes in gebremster Stellung erreicht der Stromfluss aufgrund der reduzierten Induktivität einen globalen, maximalen Stromwert. Die anschließend gemessenen Stromstärken werden mit den Referenzwerten verglichen, wodurch die Lage des Ankers und damit die Stellung der Bremsvorrichtung bestimmt werden.

Es ist vorteilhaft vorgesehen, dass die Steuereinrichtung ein Muster der Betätigung des Bedienelements ermittelt. Mittels derartiger Muster kann eine Vielzahl an Informationen übermittelt werden. Vorzugsweise vergleicht die Steuereinrichtung das erfasste Muster der Betätigung des Bedienelements mit einem gespeicherten Muster. In Abhängigkeit des gespeicherten Musters können weitere Verfahrensschritte eingeleitet werden, die den Zustand bzw. den weiteren Betrieb des Arbeitsgerätes beeinflussen. Die Steuereinrichtung ändert insbesondere den Zustand mindestens einer Komponente des Arbeitsgeräts, wenn das erfasste Muster mit dem gespeicherten Muster übereinstimmt.

Ein Muster kann beispielsweise aus mehrfachen Versuchen des Bedieners bestehen, in einem vorgegebenen Zeitraum zu versuchen, die Bremseinrichtung in die gebremste Stellung zu bewegen.

Ausführungsbeispiele der Erfindung werden im Folgenden anhand der Zeichnung erläutert. Es zeigen:
- Fig. 1: eine teilgeschnittene Seitenansicht eines Trennschleifers, wobei die Schnittebene im Ausleger liegt,
- Fig. 2: eine schematische Schnittdarstellung durch den Antrieb des Trennschleifers aus Fig. 1,
- Fig. 3: eine Draufsicht auf den Trennschleifer aus Fig. 1 in Richtung des Pfeils III in Fig. 1,
- Fig. 4: eine vergrößerte Darstellung des geschnitten dargestellten Bereichs des Auslegers des Trennschleifers aus Fig. 1,
- Fig. 5: eine Seitenansicht des Auslegers und der Schutzhaube, wobei einige Komponenten des Auslegers nicht dargestellt sind,
- Fig. 6: eine ausschnittsweise vergrößerte Darstellung des Bereichs des Schwenkhebels aus Fig. 5 mit dem Schwenkhebel in gelöster Stellung,
- Fig. 7: ein schematisches Ablaufdiagramm des erfindungsgemäßen Verfahrens zur Bestimmung der Lage des Ankers,
- Fig. 8: ein schematisches Diagramm der Spannungsimpulse und des Stromstärkeverlaufs über der Zeit und
- Fig. 9: eine ausschnittsweise vergrößerte Darstellung des Bereichs des Schwenkhebels mit einer schematisch dargestellten zusätzlichen Positionierungseinheit.

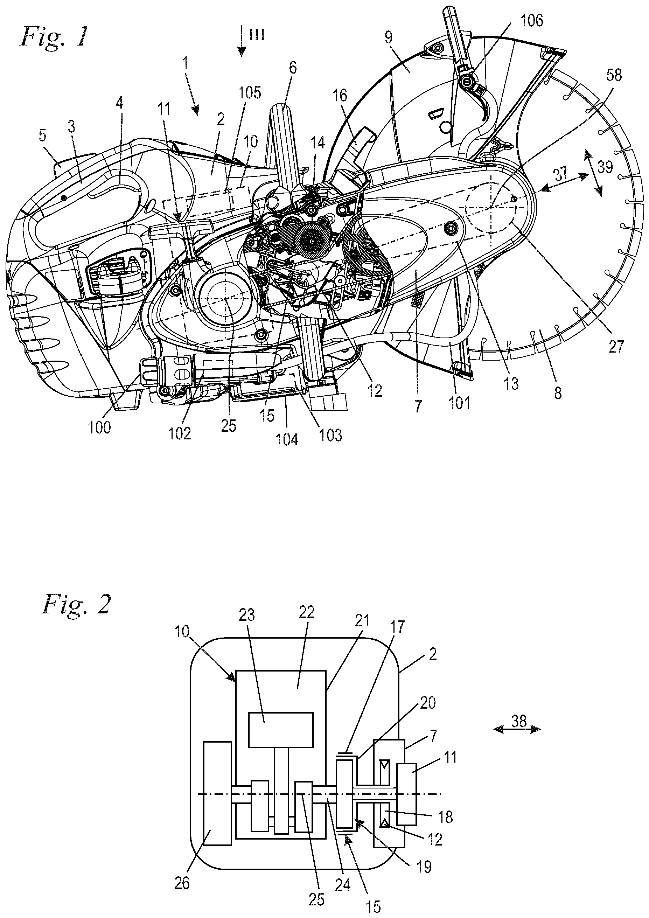

Fig. 1 zeigt als Ausführungsbeispiel für ein handgeführtes Arbeitsgerät einen Trennschleifer 1. Der Trennschleifer 1 besitzt ein Gehäuse 2, an dem ein Handgriff 3 sowie ein Bügelgriff 6 zum Führen des Trennschleifers 1 im Betrieb festgelegt sind. Am Handgriff 3, der im Ausführungsbeispiel an der Oberseite des Gehäuses 2 angeordnet ist, sind ein Gashebel 4 sowie eine Gashebelsperre 5 zur Bedienung eines im Gehäuse 2 angeordneten Antriebsmotors 10 vorgesehen. Der Handgriff 3 kann auch als hinterer Handgriff ausgeführt sein. Der Antriebsmotor 10 ist vorzugsweise ein Verbrennungsmotor, insbesondere ein Einzylinder-Zweitaktmotor. Zum manuellen Starten des Antriebsmotors 1 ist eine Anwerfvorrichtung 11, im Ausführungsbeispiel ein Seilzugstarter, vorgesehen. Es kann auch vorgesehen sein, dass der Antriebsmotor 10 ein Elektromotor ist, der vorzugsweise über einen Akku mit Energie versorgt wird.

Der Trennschleifer 1 besitzt einen Ausleger 7, der im Ausführungsbeispiel am Gehäuse 2 fixiert ist. Am freien Ende des Auslegers 7 ist eine Trennscheibe 8 um eine Drehachse 58 rotierend gelagert. Die Trennscheibe 8 ist das Werkzeug des Trennschleifers 1 und über einen Riementrieb vom Antriebsmotor 10 angetrieben. Auch ein anderer Antrieb der Trennscheibe 8 kann vorteilhaft sein. Der Riementrieb ist im Ausführungsbeispiel als zweistufiger Riementrieb ausgeführt und umfasst einen ersten Antriebsriemen 12 und einen zweiten Antriebsriemen 13. Zum Spannen der Antriebsriemen 12 und 13 sind Spannrollen 14 vorgesehen, von denen in Fig. 1 eine gezeigt ist. Der Riementrieb ist als Untersetzungsgetriebe ausgebildet, so dass die Drehzahl der Trennscheibe 8 geringer als die des Antriebsmotors 10 ist. Es kann auch vorgesehen sein, dass der Trennschleifer 1 lediglich einen Antriebsriemen zwischen dem Antriebsmotor 10 und dem angetriebenen Werkzeug 8 aufweist.

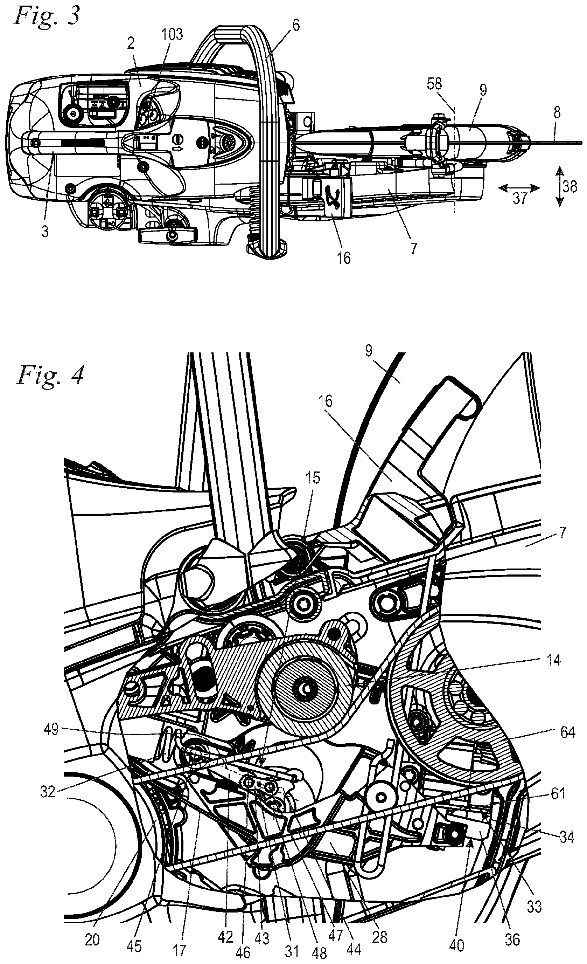

Die Trennscheibe 8 ist über einen Teil ihres Umfangs von einer Schutzhaube 9 abgedeckt. Im Betrieb entsteht beim Einsatz der Trennscheibe 8 zum Trennen von Gestein eine große Menge an Staub. Zum Binden des Staubs und zum Kühlen der Trennscheibe 8 kann eine Flüssigkeitsversorgung, insbesondere eine Wasserversorgung vorgesehen sein. Die Flüssigkeitsversorgung umfasst einen Flüssigkeitsanschluss 100 zum Anschluss an eine externe Flüssigkeitszufuhr. Der Flüssigkeitsanschluss 100 ist über eine Flüssigkeitsleitung 101 mit mindestens einem Zuführventil 106, insbesondere einer Zuführdüse, an der Schutzhaube 9 verbunden. Zur Steuerung der zugeführten Flüssigkeitsmenge ist ein Ventil 102 vorgesehen, das elektrisch gesteuert ist. Die vom Bediener gewünschte zuzuführende Flüssigkeitsmenge kann über ein Bedienfeld 107 (Fig. 3) an der Oberseite des Gehäuses 2 eingestellt werden. In einem alternativen Ausführungsbeispiel kann es zweckmäßig sein, den Trennschleifer 1 mit einer manuell einstellbaren oder ohne eine Flüssigkeitsversorgung auszubilden.

Es ist eine Steuereinrichtung 103 für das Ventil 102 vorgesehen, die das Ventil 102 entsprechend ansteuert. Die Steuereinrichtung 103 ist im Ausführungsbeispiel an der Unterseite des Gehäuses 2 angeordnet. Die Steuereinrichtung 103 ist im Ausführungsbeispiel nicht im Gehäuse 2 angeordnet, sondern außerhalb des Gehäuses 2 und von einer separaten Abdeckung 104 nach unten abgedeckt. Die Steuereinrichtung 103 ist vorteilhaft vergossen, so dass sich durch das Vergießen und die Abdeckung 104 ein doppelter Schutz vor Verschmutzungen oder Flüssigkeit ergibt.

Die Abdeckung 104 ist am Gehäuse 2 vorteilhaft über Schnappverbindungen und/oder Schraubverbindungen fixiert. Die Steuereinrichtung 103 liegt in der Abdeckung 104 vorteilhaft mit Abstand. Ein definierter Abstand zwischen Steuereinrichtung 103 und Abdeckung 104 kann beispielsweise über Rippen zwischen der Steuereinrichtung 103 und der Abdeckung 104 erreicht werden. In bevorzugter Gestaltung besitzt die Abdeckung 104 mindestens eine Ablauföffnung an ihrer im üblichen Betrieb unten angeordneten Unterseite, so dass Feuchtigkeit oder Schmutz aus der Abdeckung 104 austreten kann. Es kann vorteilhaft sein, die Steuereinrichtung 103 gegenüber der Abdeckung 104 über mindestens ein Dämpfungselement abzustützen.

Zur Steuerung des Antriebsmotors 10 ist vorteilhaft eine zusätzliche Steuereinrichtung 105 vorgesehen, die getrennt von der Steuereinrichtung 103 ausgebildet ist und insbesondere im oberen Bereich des Gehäuses 2 am Antriebsmotor 10 selbst angeordnet ist. Auch eine andere Anordnung der zusätzlichen Steuereinrichtung 105 oder die Anordnung einer weiteren Steuereinrichtung zur Ansteuerung des Antriebsmotors 10 kann vorteilhaft sein. In der zusätzlichen Steuereinrichtung 105 kann vorteilhaft die Steuerung des Elektromagneten 33 (Fig. 4) erfolgen.

Der Trennschleifer 1 besitzt eine Bremsvorrichtung 15. Zum Auslösen der Bremseinrichtung 15 ist vorteilhaft ein Drehratensensor vorgesehen. Im Ausführungsbeispiel ist vorgesehen, dass der Drehratensensor ebenfalls in der Steuereinrichtung 103 angeordnet ist. Der Drehratensensor ist dabei vorteilhaft zur Drehachse 58 der Trennscheibe 8 ausgerichtet. Bevorzugt liegt eine Messachse des Drehratensensors parallel zur Drehachse 58.

Der Ausleger 7 besitzt eine Längsrichtung 37, die im Ausführungsbeispiel die Verbindungsgerade der Antriebsachse und der Abtriebsachse des Riementriebs in einer Seitenansicht in Richtung der Antriebsachse bildet. Im Ausführungsbeispiel fällt die Antriebsachse mit einer Drehachse 25 einer Kurbelwelle 24 (Fig. 2) des Antriebsmotors 10 zusammen, und die Abtriebsachse ist die Drehachse 58 der Trennscheibe 8. In der Längsrichtung 37 liegt die größte Erstreckung des Auslegers 7 senkrecht zur Drehachse 58. Der Ausleger 7 besitzt eine Hochrichtung 39, die senkrecht zur Längsrichtung 37 und senkrecht zu den Drehachsen 25 und 58 ausgerichtet ist. Der Ausleger 7 besitzt außerdem eine Querrichtung 38, die in Fig. 1 senkrecht zur Blattebene ausgerichtet und in Fig. 2 gezeigt ist. Die Querrichtung 38 erstreckt sich senkrecht zur Längsrichtung 37 und senkrecht zur Hochrichtung 39.

Fig. 2 zeigt den schematischen Aufbau des Antriebs des Trennschleifers 1 im Einzelnen. Der Antriebsmotor 10 besitzt einen Zylinder 21, in dem ein Brennraum 22 ausgebildet ist. Der Brennraum 22 ist von einem Kolben 23 begrenzt, der die Kurbelwelle 24 um die Drehachse 25 rotierend antreibt. An einer Seite des Antriebsmotors 10 ist ein Lüfterrad 26 zur Förderung von Kühlluft angeordnet. Im Ausführungsbeispiel ist an der gegenüberliegenden Seite eine Fliehkraftkupplung 19 angeordnet, über die die Kurbelwelle 24 mit einer Antriebsscheibe 18 des Riementriebs zu verbinden ist. Die Fliehkraftkupplung 19 besitzt eine Kupplungstrommel 20, an deren Außenumfang ein Bremsband 17 der Bremseinrichtung 15 angeordnet ist. Die Bremseinrichtung 15 wirkt auf die Kupplungstrommel 20 der Fliehkraftkupplung 19, also an der Abtriebsseite der Fliehkraftkupplung 19. An der Außenseite des Auslegeres 7 ist die Anwerfvorrichtung 11 angeordnet.

Wie Fig. 1 zeigt, ist an der Oberseite des Auslegers 7 ein Betätigungshebel 16 angeordnet, der zum Lösen der Bremsvorrichtung 15 dient, wie im Folgenden noch näher beschrieben wird.

Die Anordnung des Betätigungshebels 16 ist auch in Fig. 3 gezeigt. Fig. 3 zeigt außerdem die Ausrichtung der Querrichtung 38 senkrecht zur Längsrichtung 37.

Fig. 4 zeigt die Gestaltung der Bremsvorrichtung 15 näher. Die Bremsvorrichtung 15 besitzt einen Schwenkhebel 28. Der Schwenkhebel 28 bildet das Betätigungselement der Bremsvorrichtung 15. Fig. 4 zeigt den Schwenkhebel 28 in einer gelösten Stellung 40 der Bremsvorrichtung 15. Die Bremsvorrichtung 15 umfasst einen Elektromagneten 33, der am Ausleger 7 fixiert ist. Am Schwenkhebel 28 ist benachbart zum freien Ende des Schwenkhebels 28 ein Anker 36 angeordnet, der in der gelösten Stellung 40 am Elektromagneten 33 anliegt und durch die Magnetkraft am Elektromagneten 33 fixiert ist. Durch den Elektromagneten 33 ist der Schwenkhebel 28 in der gelösten Stellung 40 gehalten. In der gelösten Stellung 40 ist das Bremsband 17 gelöst und liegt nicht fest am Umfang der Kupplungstrommel 20 an. Dadurch kann der Antriebsmotor 10, wenn die Fliehkraftkupplung 19 (Fig. 2) einkuppelt, über den Riementrieb die Trennscheibe 8 (Fig. 1) antreiben.

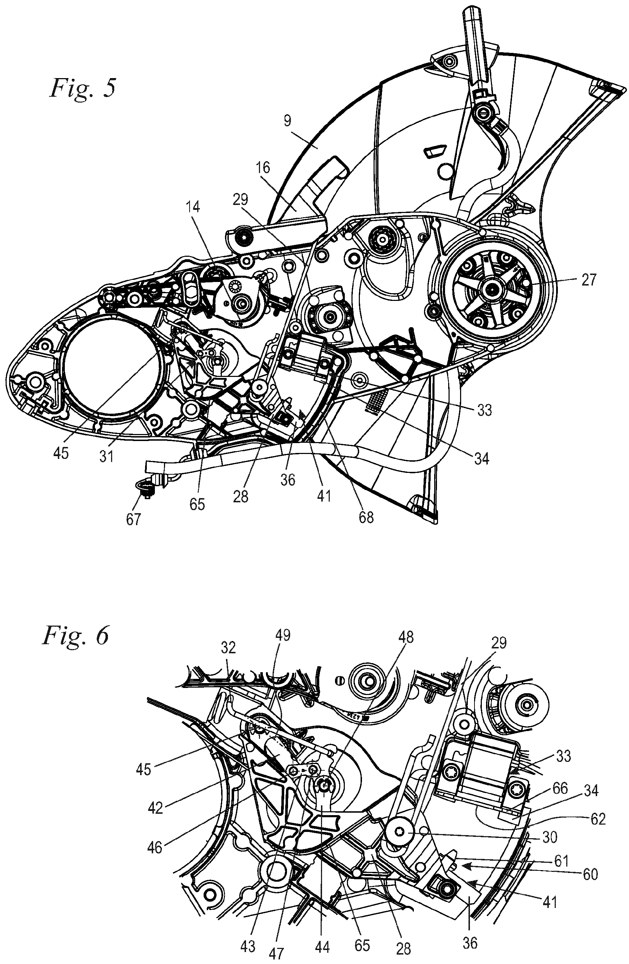

Die Bremsvorrichtung 15 besitzt vorteilhaft eine Kniehebelanordnung 31, die auf das Bremsband 17 wirkt. Die Kniehebelanordnung 31 dient dazu, beim Verschwenken des Schwenkhebels 28 aus der in Fig. 4 gezeigten gelösten Stellung 40 in die in Fig. 5 gezeigte gebremste Stellung 41 das Bremsband 17 um die Kupplungstrommel 20 zu ziehen und dadurch die Trennscheibe 8 zu bremsen. Wie Fig. 4 zeigt, umfasst die Kniehebelanordnung 31 einen Hebel 44, der um eine Schwenkachse 48 schwenkbar am Anschlussstück gehalten ist. Am Hebel 44 ist an einem Ende eine Auslösefeder 32 eingehängt. An einem zweiten, in Fig. 4 vom Schwenkhebel 28 verdeckten Ende des Hebels 44 ist das Bremsband 17 mit einem Ende eingehängt. Das zweite Ende des Bremsbands 17 ist gehäusefest fixiert. Um das Bremsband 17 um die Kupplungstrommel 20 festzuziehen, muss der Hebel 44 in der Darstellung in Fig. 4 im Gegenuhrzeigersinn um die Schwenkachse 48 verschwenken. Am Hebel 44 ist zwischen der Schwenkachse 48 und dem Einhängepunkt der Auslösefeder 32 ein Hebel 43 um eine Schwenkachse 47 schwenkbar gelagert. Am zweiten Ende des Hebels 43 ist ein Hebel 42 um eine Schwenkachse 46 schwenkbar gelagert. Der Hebel 42 ist mit seinem anderen Ende um eine Schwenkachse 45 schwenkbar gelagert und wird in seiner Bewegung durch den Schwenkhebel 28 geführt. Im Ausführungsbeispiel ist die Schwenkachse 45 die Schwenkachse, um die der Schwenkhebel 28 gegenüber dem Ausleger 7 schwenkbar gelagert ist. Es kann jedoch auch vorgesehen sein, dass der Hebel 42 um eine von der Schwenkachse 45 beabstandete Schwenkachse gegenüber dem Schwenkhebel 28 schwenkbar gelagert ist. Die Schwenkachsen 45, 46, 47 und 48 liegen parallel zueinander. Die Schwenkachsen 45 und 47 definieren eine Kipphebelebene 49. Zwischen den Schwenkachsen 45 und 47 liegt die Schwenkachse 46, die das Kniehebelgelenk bildet. Die Schwenkachse 46 liegt in der gelösten Stellung 40 mit geringem Abstand zur Kipphebelebene 49. In Fig. 4 ist auch eine Zwischenscheibe 64 des Riementriebs erkennbar, um die der erste Antriebsriemen 12 geführt ist.

Zum Betätigen der Bremseinrichtung 15 wird der Elektromagnet 33 abgeschaltet. Dadurch löst sich der Anker 36 vom Elektromagneten 33, und der Schwenkhebel 28 schwenkt in die in den Fig. 5 und 6 gezeigte gebremste Stellung 41. In der gelösten Stellung 40 der Bremseinrichtung 15 ist die Kniehebelanordnung 31 vorgespannt, wie Fig. 4 zeigt. Dadurch, dass die Schwenkachse 46, an der die Hebel 42 und 43 miteinander verbunden sind, und der Einhängepunkt der Auslösefeder 32 am Hebel 44 auf gegenüberliegenden Seiten der Kniehebelebene 49 liegen, wirkt die Kraft der Auslösefeder 32 in Richtung auf eine Verstellung der Kniehebelanordnung 31 in Richtung auf die gebremste Stellung 41. Dieser Kraft wirkt der Elektromagnet 33 in gelöster Stellung 40 entgegen. In der gelösten Stellung 40 ist der Übertragungswinkel der Federkraft auf den Kniehebel aufgrund des nahezu gestreckten Kniehebelgelenks, das an der Achse 46 ausgebildet ist, derart reduziert, dass die Magnetkraft des Elektromagneten 33 ausreicht, um den Schwenkhebel 28 entgegen der wirkenden Federspannung der Auslösefeder 32 in der kinematisch instabilen gelösten Stellung 40 zu halten. Der Elektromagnet 33 kann die Bremseinrichtung 15 in der gelösten Stellung 40 der Bremseinrichtung 15 halten. Wird der Elektromagnet 33 abgeschaltet, so verstellt die Auslösefeder 32 den Hebel 44. Dabei entfernt sich die Schwenkachse 46 weiter von der Kniehebelebene 49. Das Kniehebelgelenk knickt ein, und die Auslösefeder 32 kann den Hebel 44 verschwenken, wodurch das Bremsband 17 gespannt wird. Auch in der gebremsten Stellung 41 der Bremseinrichtung 15 liegen die Schwenkachse 46 und der Einhängepunkt der Auslösefeder 32 am Hebel 44 auf gegenüberliegenden Seiten der Kniehebelebene 49. Im Ausführungsbeispiel befindet sich die Schwenkachse 46 unabhängig von der Stellung der Bremseinrichtung 15 stets auf einer Seite, in der Darstellung in Fig. 4 unterhalb der Kniehebelebene 49. Dadurch wirkt die Kniehebelanordnung 31 nicht selbsthemmend, d. h. das Kniehebelgelenk wird vorzugsweise nie auf die gegenüberliegende Seite der Kniehebelebene 49 überdrückt. Es wird keine Rückstellfeder benötigt, die die Kniehebelanordnung 31 entsperrt. Die Kniehebelanordnung 31 wird in gelöster Stellung 40 des Schwenkhebels 28 vorteilhaft ausschließlich durch den Elektromagneten 33 in ihrer instabilen Lage gehalten.

In Fig. 5 ist auch die Abtriebsscheibe 27 des Riementriebs gezeigt.

Zur Verstellung der Bremseinrichtung 15 aus der in den Fig. 5 und 6 gezeigten gebremsten Stellung 41 des Schwenkhebels 28, in der das Bremsband 17 um die Kupplungstrommel 20 angezogen ist, in die in Fig. 4 gezeigte gelöste Stellung 40, in der die Bremse nicht auf die Kupplungstrommel 20 wirkt, verschwenkt der Bediener den Betätigungshebel 16 vorzugsweise nach oben. Am Betätigungshebel 16 (Fig. 5) ist eine auch in Fig. 6 gezeigte Betätigungsstange 29 eingehängt. Die Betätigungsstange 29 ist an einem Führungsbolzen 30 des Schwenkhebels 28 eingehängt und verschwenkt den Schwenkhebel 28 in die gelöste Stellung 40. Die Betätigungsstange 29 ist mit einem Langloch am Führungsbolzen 30 eingehängt, so dass der Betätigungshebel 16 gegenüber dem Schwenkhebel 28 bewegt und in seine Ausgangsstellung zurückgestellt werden kann, ohne dass die Bremsvorrichtung 15 in die gebremste Stellung 41 des Schwenkhebels 28 zurückgestellt wird.

Wie in Fig. 6 gezeigt, ist eine Führung 60 vorgesehen. Die Führung 60 umfasst einen Zapfen 61, der durch eine Öffnung 62 eines Führungsblechs 66 ragt. Das Führungsblech 66 ist im Ausführungsbeispiel L-förmig ausgebildet und am Elektromagneten 33 fixiert. Die Öffnung 62 und der Zapfen 61 begrenzen die Relativbewegung des Elektromagneten 33 gegenüber dem Anker 36 in Querrichtung 38. Durch die Führung 60 sind Anker 36 und Elektromagnet 33 auch bei erhöhten Vibrationen des Trennschleifers 1 zueinander positioniert. In Fig. 4 liegt der Anker 36 am Joch 34 des Elektromagneten 33 an und wird von diesem gehalten. Der Zapfen 61 ragt in die Öffnung 62.

Wie Fig. 5 auch zeigt, ist der Elektromagnet 33 über eine elektrische Leitung 68 mit einem Anschlussstecker 67 zur Verbindung mit einer Steuereinrichtung verbunden. Die Steuereinrichtung ist bevorzugt die Steuereinrichtung 103, die auch den Drehratensensor aufweist, so dass der Elektromagnet 33 gelöst werden kann, wenn die Drehrate des Trennschleifers 1 einen vorgegebenen Wert übersteigt.

Die Steuereinrichtung 103 ist derart ausgebildet, dass diese die Lage des Ankers 36 gegenüber dem Elektromagneten 33 zur Bestimmung der Stellung der Bremsvorrichtung 15 ermitteln kann.

Es kann vorteilhaft vorgesehen sein, dass die zusätzliche Steuereinrichtung 105 derart ausgebildet ist, dass diese die Lage des Ankers 36 gegenüber dem Elektromagneten 33 zur Bestimmung der Stellung der Bremsvorrichtung 15 ermitteln kann.

Zudem ist die Steuereinrichtung 103 vorteilhaft derart ausgebildet, dass zwischen dem Bediener und dem Arbeitsgerät auf einfache Weise eine Informationsübermittlung möglich ist. Eine derartige Informationsübermittlung ist insbesondere dann von Bedeutung, wenn sich das Arbeitsgerät in einem Servicezustand befindet. In einem solchen Zustand kann der Bediener beispielweise aufgefordert werden, gewisse Komponenten auszutauschen oder zu warten. Im Anschluss muss der Bediener die erfolgte Handlung bestätigen.

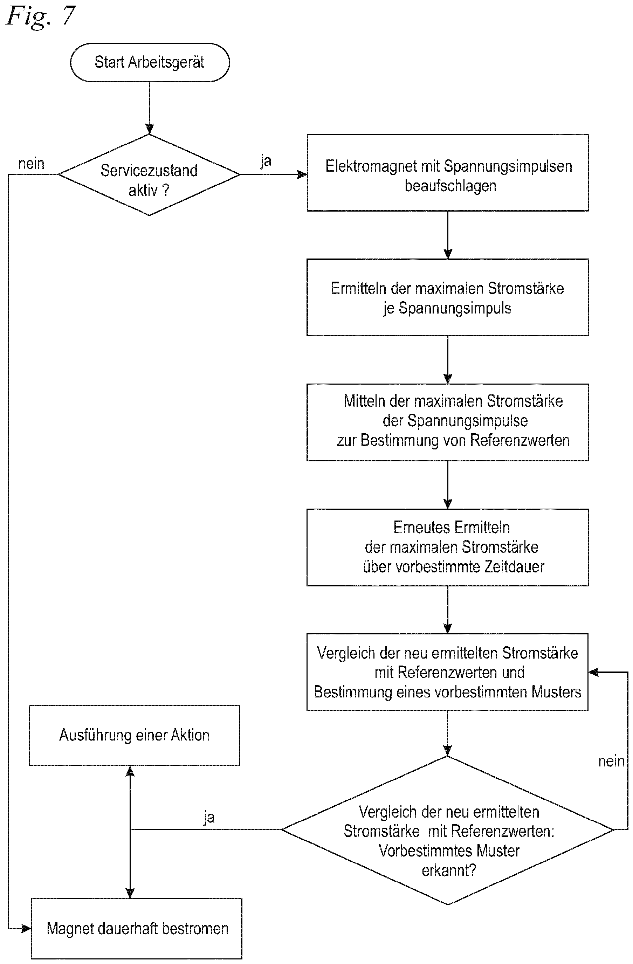

Im Ausführungsbeispiel kann der Bediener über den Betätigungshebel 16 Bedienmuster 50 eingeben. Hierzu erkennt die Steuereinrichtung 103 die Lage des Ankers 36 gegenüber dem Elektromagneten 33. Wie bereits oben ausgeführt, ist der Anker 36 mit dem Schwenkhebel 28 mechanisch gekoppelt. Anhand des in Fig. 7 gezeigten Ablaufdiagramms ist nachfolgend die Ermittlung der Lage des Ankers 36 näher beschrieben.

Nach dem Start des Arbeitsgerätes prüft die Steuereinrichtung 103, 105 ob der Servicezustand aktiviert ist. Der Servicezustand kann beispielsweise in Abhängigkeit von einer Mindestanzahl an Betriebsstunden, an Entlüftungsvorgängen der Bremsvorrichtung 15 oder ähnlichem seit einem vorherigen Wartungsintervall ausgelöst werden. Ist der Servicezustand deaktiviert, erfolgt weiterhin der Normalbetrieb des Arbeitsgerätes 1. Ist der Servicezustand aktiviert, erfolgt die Bestimmung der Lage des Ankers 36 und damit auch die Bestimmung der Stellung der Bremseinrichtung 15.

Um die Lage des Ankers 36 gegenüber dem Elektromagneten 33 bestimmen zu können, führt die Steuereinrichtung Stromstärkemessungen an der Spule des Elektromagneten 33 durch, wobei die Stromstärke bedingt durch die sich in Abhängigkeit der Lage des Ankers 36 verändernde Induktion verschieden ist. Die Induktivität verursacht eine bremsende Wirkung auf den Stromfluss durch den Elektromagneten 33. Ist die Induktivität hoch, steigen aufgrund der bremsenden Wirkung auf den Stromfluss die Stromwerte nur langsam an. Ist die Induktivität gering, steigen die Stromwerte entsprechend schnell an.

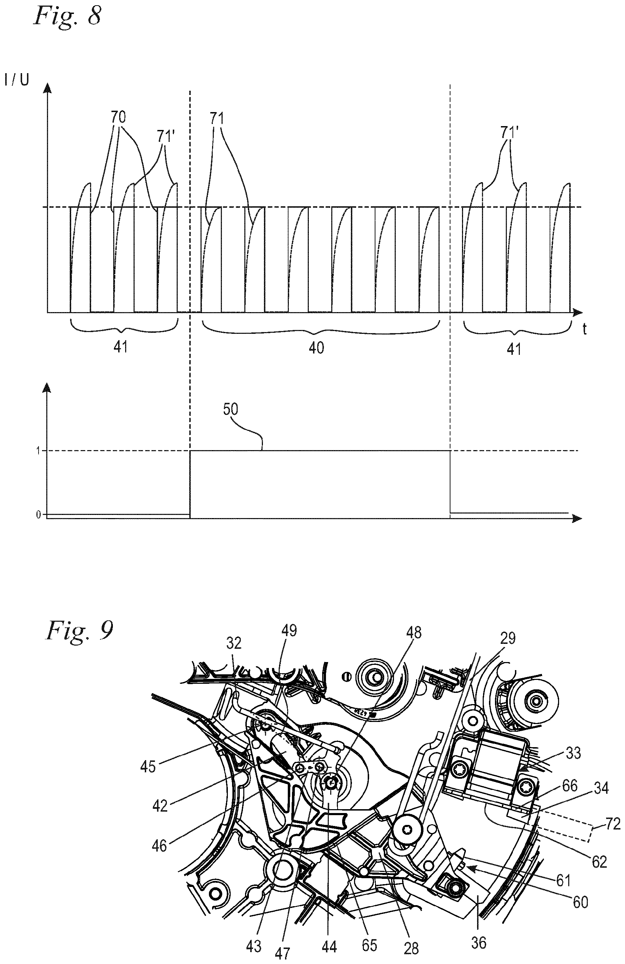

Wie in Fig. 8 gezeigt, gibt die Steuereinrichtung 103, 105 Spannungsimpulse 70 auf den Elektromagneten 33, um die Lage des Ankers 36 detektieren zu können. Die Spannungsimpulse 70 sind zeitlich begrenzt. Über die Dauer des Spannungsimpulses 70 steigt der Stromstärkeverlauf 71, 71' an, bis der Spannungsimpuls beendet ist. Liegt der Anker 36 an dem Elektromagneten 33 an, ist die Induktivität erhöht, wodurch der Stromfluss gebremst wird. Folglich steigen die Stromwerte langsamer an, wodurch der maximale Stromwert innerhalb eines Spannungsimpulses 70 geringer ist. Ist der Anker 36 vom Elektromagneten 33 beabstandet, ist die Induktivität reduziert, wodurch der Stromfluss weniger stark gebremst wird. Die Stromwerte steigen schneller an, wodurch höhere maximale Stromwerte innerhalb eines Spannungsimpulses erzielt werden. Um also zu ermitteln, in welcher Stellung sich die Bremseinrichtung befindet, werden in einem ersten Schritt Referenzwerte ermittelt. Die Steuereinrichtung 103 gibt auf die Spule des Elektromagneten 36 Spannungsimpulse 70, die vorzugsweise eine Rechteckform gemäß Fig. 8 aufweisen. Die Spannungsimpulse 70 sind derart ausgelegt, dass die durch den Elektromagneten 33 entstehende Haltekraft nicht ausreicht, den Anker 36 an dem Elektromagneten 33 entgegen der Zugkraft der Auslösefeder 32 zu halten. Folglich befindet sich die Bremseinrichtung 15 in der gebremsten Stellung 41, sofern der Bediener den Betätigungshebel 16 nicht betätigt. In dieser gebremsten Stellung 41 ist der Abstand zwischen dem Anker 36 und dem Joch 34 des Elektromagneten 33 maximal. Folglich ist die Induktion minimal, wodurch innerhalb eines Spannungsimpulses 70 erhöhte Stromwerte gemessen werden können. Zur Bildung eines Referenzwertes werden mehrere Maximalwerte des Stromstärkeverlaufs 71 gemittelt. Derartige Maximalwerte des Stromstärkeverlaufs 71 bei gebremster Stellung 41 der Bremseinrichtung 15 liegen vorzugsweise bei in etwa 50 mA.

Hat die Steuereinrichtung 103 die Referenzwerte ermittelt, werden weitere Stromstärkeverläufe 71' als Antwort auf die Spannungsimpulse 70 gemessen. Ist in dem Servicezustand der Betätigungshebel 16 durch den Bediener betätigt, befindet sich die Bremseinrichtung 15 in der gelösten Stellung 40. In dieser gelösten Stellung 40 ist der Abstand zwischen dem Anker 36 und dem Joch 34 des Elektromagneten 33 minimal. Vorzugsweise liegt der Anker 36 an dem Joch 34 unmittelbar an. Folglich ist die Induktion maximal, wodurch der Stromfluss gebremst wird und sich innerhalb des Spannungsimpulses 70 nur geringe Stromwerte einstellen. Derartige Stromwerte bei gelöster Stellung 40 der Bremseinrichtung 15 liegen vorzugsweise bei in etwa 35 mA. Die Steuereinrichtung 103, 105 vergleicht die ermittelten Stromwerte mit den zuvor bestimmten Referenzwerten und erkennt, ob der Abstand zwischen Anker 36 und dem Elektromagneten 33 groß oder klein ist, bzw. ob sich die Bremseinrichtung 15 in fixierter Stellung 41 oder in gelöster Stellung 40 befindet.

Selbstverständlich sieht die Steuereinrichtung 103, 105 bei der Lagebestimmung des Ankers 36 entsprechende Toleranzen vor. So wird eine gelöste Stellung 40 der Bremseinrichtung 15 auch dann angenommen, wenn eine Abweichung des Stromstärkeverlaufs 71 gegenüber dem erwarteten Referenzwert von kleiner 20%, insbesondere von kleiner 10% vorliegt.

In der Steuereinrichtung 103, 105 sind Bedienmuster 50 hinterlegt, die eine Abhängigkeit von Zeitdauer und Anzahl der Schaltvorgänge der Bremsvorrichtung 15 mit dem Bedienhebel 16 von der gebremsten Stellung 41 in die gelöste Stellung 40 und wieder zurück berücksichtigen. Je nach Bedienmuster 50 kann eine entsprechende Information vom Bediener an das Arbeitsgerät 1 übermittelt werden. Die Steuereinrichtung 103, 105 gleicht die vorgespeicherten Bedienmuster 50 mit den vom Bediener durchgeführten und von der Steuereinrichtung 103 gemessenen Bedienmustern 50 ab. Je nach erkanntem Bedienmuster 50 wird eine Handlung ausgelöst, die beispielsweise auf den Zustand einer Komponente des Arbeitsgerätes 1 wirkt und diesen ändert. Der Servicezustand wird abschließend beendet. Das Arbeitsgerät 1 befindet sich wieder im Betriebszustand.

In einer alternativen Ausführung des Arbeitsgerätes 1 kann es zweckmäßig sein, eine zusätzliche Positionierungseinheit 72 vorzusehen, welche die Lage des Ankers 36 bestimmt. Eine solche Positionierungseinheit 72 ist schematisch in Fig. 9 dargestellt. Die Positionierungseinheit 72 ist mit der Steuereinrichtung 103, 105 verbunden. Die Positionierungseinheit 72 wirkt mit dem Anker zusammen, wobei über die Steuereinrichtung 103, 105 die Lage des Ankers 36 bzw. die Stellung der Bremseinrichtung 15 erkannt wird. Es kann zweckmäßig sein, die Positionierungseinheit 72 als einen Schalter auszubilden. Bei Betätigung des Schalters durch den Anker 33 wird ein Stromkreis entweder unterbrochen oder geschlossen, wodurch die Steuereinrichtung 103, 105 die Lage des Ankers 33 erkennt. Es kann auch vorteilhaft sein, die Positionierungseinheit 72 als einen berührungslosen Schalter auszubilden, der beim Zusammenwirken mit dem Anker 33 ein entsprechendes Signal an die Steuereinrichtung 103, 105 leitet. Ein derartiger Schalter kann beispielsweise als ein Näherungssensor, Hall-Sensor, Reed-Kontakt ausgebildet sein.

## Patentansprüche

1. Handgeführtes Arbeitsgerät mit einem Antriebsmotor (10), wobei der Antriebsmotor (10) mindestens ein Werkzeug (8) antreibt, und mit einer mechanischen Bremsvorrichtung (15) für das Werkzeug (8), wobei die Bremsvorrichtung (15) vom Bediener mittels eines Betätigungshebels (16) zwischen einer gebremsten Stellung (41) und einer gelösten Stellung (40) verstellbar ist, wobei das Arbeitsgerät (1) einen Elektromagneten (33) und einen mit dem Elektromagneten (33) zusammenwirkenden Anker (36) umfasst, wobei der Elektromagnet (33) dazu ausgebildet ist, die Bremsvorrichtung (15) in ihrer gelösten Stellung (40) zu halten, wobei das Arbeitsgerät (1) mindestens eine Steuereinrichtung (103, 105) aufweist,
**dadurch gekennzeichnet, dass** die mindestens eine Steuereinrichtung (103, 105) dazu ausgebildet ist, die Lage des Ankers (36) gegenüber dem Elektromagneten (33) zur Bestimmung der Stellung (40, 41) der Bremsvorrichtung (15) zu ermitteln.

2. Handgeführtes Arbeitsgerät nach Anspruch 1,
**dadurch gekennzeichnet, dass** die mechanische Bremsvorrichtung (15) ein Bremsband (17) umfasst, wobei das Bremsband (17) auf eine das Werkzeug (8) antreibende Kupplungstrommel (20) wirkt.

3. Handgeführtes Arbeitsgerät nach Anspruch 1 oder 2,
**dadurch gekennzeichnet, dass** der Betätigungshebel (16) mechanisch einen Schwenkhebel (28) betätigt, wobei an dem Schwenkhebel (28) der Anker (36) angeordnet ist.

4. Handgeführtes Arbeitsgerät nach Anspruch 3,
**dadurch gekennzeichnet, dass** eine Auslösefeder (32) derart auf den Schwenkhebel (28) wirkt, dass der Anker (36) über eine Zugkraft in Richtung weg von einem Joch (34) des Elektromagneten (33) gespannt ist.

5. Handgeführtes Arbeitsgerät nach Anspruch 3 oder 4,
**dadurch gekennzeichnet, dass** der Elektromagnet (33) derart ausgelegt ist, dass in bestromtem Zustand des Elektromagneten (33) in gelöster Stellung (40) der Bremsvorrichtung (15) der Anker (36) entgegen der Zugkraft am Joch (34) des Elektromagneten (33) gehalten ist.

6. Handgeführtes Arbeitsgerät nach einem der Ansprüche 1 bis 5,
**dadurch gekennzeichnet, dass** die Lage des Ankers (36) gegenüber dem Elektromagneten (33) dadurch ermittelt wird, dass am Elektromagneten (33) eine Testspannung (70) angelegt und der sich ergebende Stromfluss (71) ermittelt wird.

7. Handgeführtes Arbeitsgerät nach Anspruch 6,
**dadurch gekennzeichnet, dass** die Testspannung (70) derart ausgelegt ist, dass die aus der Testspannung (70) resultierende Magnetkraft des Elektromagneten (33) geringer ist als die auf den Anker (36) wirkende Zugkraft.

8. Handgeführtes Arbeitsgerät nach Anspruch 6 oder 7,
**dadurch gekennzeichnet, dass** die Testspannung (70) einzelnen Spannungsimpulsen entspricht.

9. Handgeführtes Arbeitsgerät nach einem der Ansprüche 1 bis 5,
**dadurch gekennzeichnet, dass** die Lage des Ankers (36) gegenüber dem Elektromagneten (33) dadurch ermittelt wird, dass ein Signal einer zusätzlichen Positionierungseinheit (72) ausgewertet wird.

10. Verfahren zum Betrieb eines handgeführten Arbeitsgeräts, wobei das Arbeitsgerät (1) einen Antriebsmotor (10) umfasst, wobei der Antriebsmotor (10) mindestens ein Werkzeug (8) antreibt, und mit einer mechanischen Bremsvorrichtung (15) für das Werkzeug (8), wobei die Bremsvorrichtung (15) vom Bediener mittels eines Betätigungshebels (16) zwischen einer gebremsten Stellung (41) und einer gelösten Stellung (40) verstellbar ist, wobei das Arbeitsgerät (1) einen Elektromagneten (33) umfasst, der dazu ausgebildet ist, die Bremsvorrichtung (15) in ihrer gelösten Stellung (40) zu halten, wobei das Arbeitsgerät (1) mindestens eine Steuereinrichtung (103, 105) aufweist, **dadurch gekennzeichnet, dass** die mindestens eine Steuereinrichtung (103, 105) die Stellung (40, 41) der Bremsvorrichtung (15) durch die Lage des Ankers (36) gegenüber dem Elektromagneten (33) über einen vorgegebenen Zeitraum mehrfach ermittelt.

11. Verfahren nach Anspruch 10,
**dadurch gekennzeichnet, dass** die mindestens eine Steuereinrichtung (103, 105) Testspannungsimpulse (70) anlegt und den sich daraus ergebenden Stromfluss (71) an dem Elektromagneten (33) ermittelt.

12. Verfahren nach Anspruch 11,
**dadurch gekennzeichnet, dass** die mindestens eine Steuereinrichtung (103, 105) zur Ermittlung der Stellung (40, 41) der Bremsvorrichtung (15) den Stromfluss (71) mit Referenzwerten vergleicht.

13. Verfahren nach Anspruch 12,
**dadurch gekennzeichnet, dass** die mindestens eine Steuereinrichtung (103, 105) die Referenzwerte in gebremster Stellung (41) der Bremsvorrichtung (15) ermittelt.

14. Verfahren nach einem der Ansprüche 10 bis 13,
**dadurch gekennzeichnet, dass** die mindestens eine Steuereinrichtung (103, 105) ein Muster der Betätigung des Betätigungshebels (16) ermittelt.

15. Verfahren nach Anspruch 14,
**dadurch gekennzeichnet, dass** die mindestens eine Steuereinrichtung (103, 105) das erfasste Muster der Betätigung des Betätigungshebels (16) mit einem gespeicherten Muster vergleicht.

16. Verfahren nach Anspruch 14 oder 15,
**dadurch gekennzeichnet, dass** die mindestens eine Steuereinrichtung (103, 105) den Zustand mindestens einer Komponente des Arbeitsgeräts (1) ändert, wenn das erfasste Muster mit dem gespeicherten Muster übereinstimmt.
